# EUROPEAN PATENT SPECIFICATION

(11) **EP 2 327 313 B1**
(45) Date of publication and mention of the grant of the patent: **31.12.2014**
(21) Application number: 10425350.5
(22) Date of filing: 12.11.2010
(51) Int. Cl.: A23G 1/00, A23G 1/22, A23G 3/00, A23G 3/02, A23G 9/22, A23G 9/26, A23G 9/50, A23G 3/56, A23G 1/50

(54) **Mold for producing food products including at least one support element**
Giessform zur Herstellung eines Nahrungsmittelprodukts das mindestens einen Stiel beinhaltet
Moule pour produire un produit alimentaire comprenant au moins un support

(30) Priority: 27.11.2009 IT VI20090284
(43) Date of publication of application: 01.06.2011
(73) Proprietor: Silikomart S.R.L., 30030 Pianiga (VE) (IT)
(72) Inventor: Martellato, Dario, 30030 Pianiga (VE) (IT)
(74) Representative: Iannone, Carlo Luigi

(56) References cited:
- EP-A1- 1 598 401
- EP-A2- 0 040 989
- DE-A1- 1 601 915
- US-A- 2 123 836
- US-A1- 2004 076 727
- US-A1- 2006 040 026

## Description

The invention herewith described concerns a mold for producing sweet or salty food products and, in preferred but not exclusive way, ice-creams or confectionery products.

More in particular, the invention relates to a mold including at least one shaped shell, at least partially made of food grade silicone elastomer or soft, where a fluid or liquid food raw material, from which directly derive the desired food product, can be housed into at least one concave surface or cavity of the shell. In correspondence of at least one membrane that delimits for at least a portion the concave surface or cavity of the shell at least one opening is made, suitable for inserting, into the food raw material contained in the concave surface or cavity, at least a support of the finished food product, such as, preferably but not exclusively, a stick for food use.

Molds of food grade are currently known, which can be used, in particular, in confectionery, for producing ice-creams, chocolates, cakes, cookies, and obtaining food products (such as sugar, almond paste, cakes dough) by compression or fluid or liquid food material freezing or cooking.

It is known that at craft or household circle hollow shaped molds are used, mostly made of metallic or plastic material, suitable to give the desired shape to the finished product. US2006/0040026 relates to horizontal moulds for edible products, with or without sticks.

In particular, field operators who produce food products of confectionery or resort ice-cream parlour resort such objects in their normal work activity. Typically, the production of sweet or salty confectionery or ice-cream parlour food products and including at least one support element implies the use of a mold into which one or more of fluid or liquid food products have to be inserted, for example creams or chocolate mixtures, in appropriate doses, or liquid sugar or almond pastes, etc.

That being stated, the molds nowadays used for producing a sweet or salty confectionery and/or ice-cream parlour food product comprising at least one support element have some recognized drawbacks.

A first drawback is constituted by the fact that the mold provides, in at least a portion of the membrane that delimits the shaped shell, a cavity or opening, which allows the insertion of a means of support into the food raw material. Such an opening, defined by the absence of at least one portion of the containment membrane of the shaped shell, is useful, from one hand, for inserting the means of support, but, on the other hand, involves at least a partial loss of the food raw material during the filling phase of the mold cavity.

A second drawback which can be found in the known art is due to the fact that the forms and shapes of the finished food products which can be produced with the use of molds for food use having a predominantly vertical development are structurally limited to a few models whose profiles allow the possibility of extracting and removing from the mold the finished food product once the freezing stage is ended.

Further prior art drawbacks are determined by the fact that, with reference to the molds used in the household sector, the means of support of the food product can be currently inserted and positioned by the operator at different depths inside the food product and, then, the outer portion of the support element presents different lengths; in addition, such support means can be positioned in the food product according to longitudinal axis not parallel to the support plane of the finished food product, with negative consequences both from the point of view of the strength of the support means and from a purely aesthetic point of view. With reference to the professional molds used up to now used and predominantly made of metallic material, the same usually present a lock for inserting a support element, which implies additional accessories and costs.

The present invention aims to overcome the drawbacks of the prior art just complained.

In particular, main purpose of the invention is to make available a mold for producing a salty or sweet ice-cream parlour and/or confectionery food product, which allows the insertion of a support element in an easier and more practical way than the state of the art and known molds.

Other purpose of the invention is to indicate a mold for preparing, producing or packaging a food product which, compared to the known technique, involves a reduction of implementation time and costs. Another purpose of the present invention is to provide a mold that allows to remove from the mold any shape of finished food products including those shapes having profiles which could not easily be removed in food use molds with predominantly vertical development.

Yet another purpose of the invention is to create a mold for producing food product which allows to get a reduction of the food raw material used to fill the cavity of the shaped shell (indeed, in mold of known type, such a food raw material usually pours out at least partly from the cavity of the shaped shell where it is placed and such a leakage mostly occurs during the filling of that cavity).

Further purpose of the present invention is to provide a mold for producing a food product including at least one support element, which can easily slide inside the liquid or fluid food raw material before or during the production phase of the finished food product.

These and other purposes are achieved through a mold for producing a food product including at least one support element, according to claim 1 attached.

Other technical details of the mold are reported in the further dependent claims.

In advantageous way, compared to the prior known technique the mold of the invention makes less wearisome and complicated the operations required to produce, prepare and/or pack a food product and also allows to facilitate the operation of insertion of a means of support of the product, such as, by illustrative but not limited way of example, a stick.

The possibility of limiting the food base product used, as well as the possibility of reducing time and costs for production the finished food product advantageously derives for the operator from the concept just expressed.

The aforesaid purposes and advantages, as well as others that will emerge in the course, will appear more evident from the description that follows, related to a preferred embodiment of the invention, given by illustrative and not limited way of example, and from the drawings attached, in which:

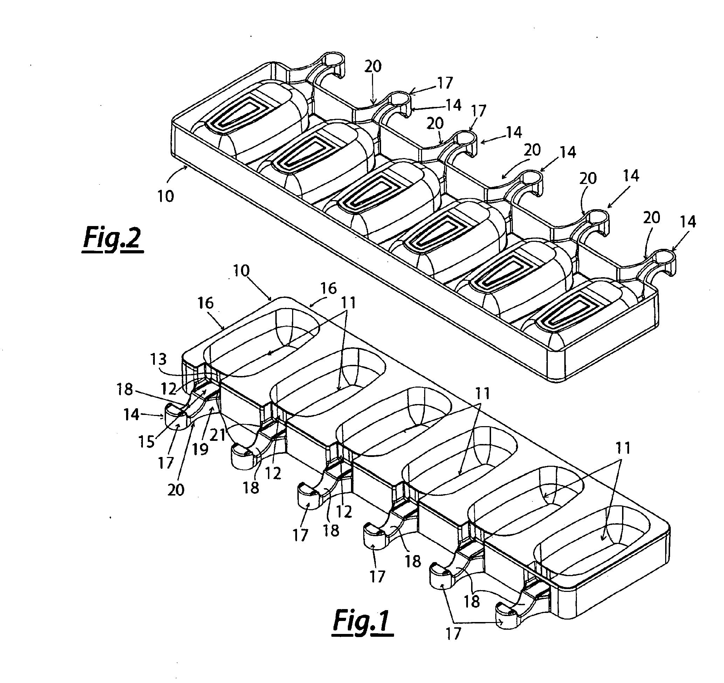

- figure 1 is a first assonometric view from the top of the mold for producing a food product, according to the present invention;
- figure 2 is a second assonometric view from the bottom of the mold of figure 1, according to the present invention;

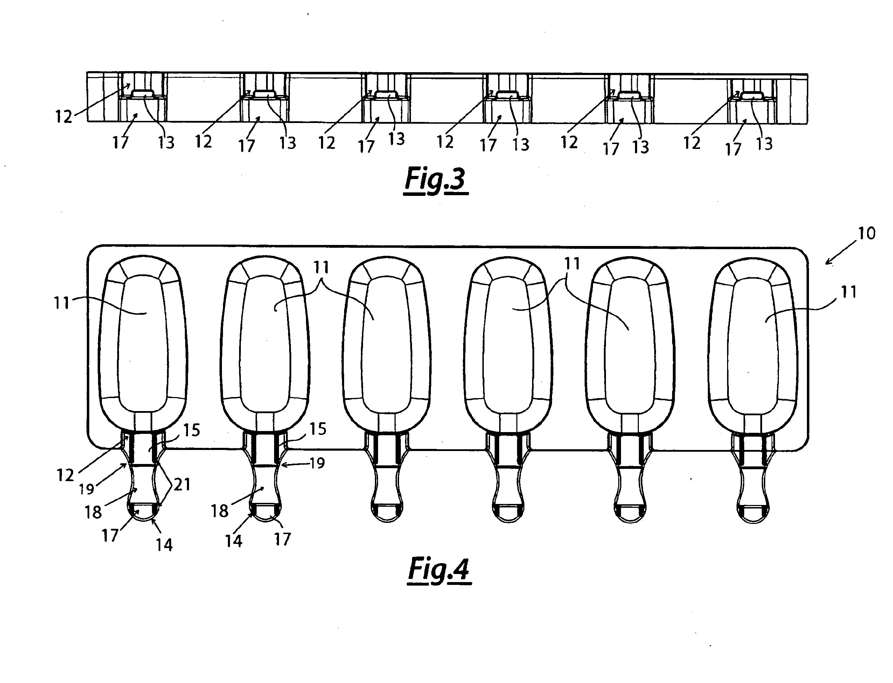

- figure 3 is a front view of the mold of figures 1 and 2, according to the present invention;
- figure 4 is a plan view from the top of the mold of figures 1 and 2, according to the invention.

With reference to the figures mentioned, the mold for producing a food product into which at least one support element is inserted, according to the present invention, essentially consists of a shaped shell 10, which presents one or more concave surfaces or cavities 11, within which fluid or liquid food product (not shown in the attached figures) is inserted. According to the invention, each cavity 11 is delimited, towards the outside, by a membrane 12 which presents, for at least one portion 16, an opening 13, at which a shaped tag 14 is made, which provides at least one cavity or slot 18, at user's disposal, for a better handle of the support element to be inserted into the food raw material that fills the cavity 11. The opening 13 allows, in particular, the insertion of a means which will serve as support for the food product during preparation, cooking, freezing or consumption of the product itself, even after the latter has been released from the mold.

Preferably but not necessarily, the tag 14 comprises a guide made by a bas-relief notch or relief channels 21 which are obtained at surface wall of the tag 14, while the shaped shell 10 presents a predominantly longitudinal development and consists of a possibly removable membrane preferably, but not necessarily, made of silicone or elastomer material of food grade.

In practice, after having poured the food product into the cavity 11 of the shaped shell 10, the operator smears with the means suitable to level or fill the aforesaid cavities 11 the food raw material for the subsequent cooking, freezing or working and the presence of the membrane 12, with the opening 13 connecting the inside of the cavity 11 with the outside, limits leakage and loss of part of the aforesaid base food material during such smearing operation.

When, after a predefined time interval, the food product reaches a consistency and malleability sufficient to allow the insertion of at least a means of support, such as a rod or stick, made of material suitable to come into contact with foodstuffs and useful to the operator for a better handiness of the food product during its preparation, as well as to the end user in order to make easier the handle of the product while consuming it, the application of such a means of support occurs by inserting a certain stretch, usually about half, of the rod or stick into the food product.

Once the insertion of the support element is completed, the shaped mold including the food product is placed in a refrigerator or oven in order to freeze or make the necessary cooking of the product itself and thus obtain the finished product.

Additionally, the provision of the opening 13 on the membrane 12 of the shaped shell 10 allows and eases, as long as the base food product is fluid or liquid, the insertion of the means of support into the food raw material placed inside the shaped cavity 11, and, beyond to reduce the leakage of the base food product, simultaneously allows the insertion and proper positioning of the support element too, thanks to the presence of the tag 14, which supports it during all the working phases of the food product.

In particular, the tag 14 is composed of one or more support elements 17, 19, connected each other by a base element 20 (onto which the cavity or slot 18 is made that makes easy handling the protruding part of the rod or stick), which allow the sliding of aforesaid rod or stick, which, resting on these elements 17, 19, inserts into at least one guide 15, placed at the opening 13.

The technical features of the mold for producing food products, which is the object of the present invention, as well as the resulting advantages, are clear from the description given.

It is, finally, clear that many other variations may be made to the mold in question, without departing from the principle of novelty intrinsic in the inventive idea expressed here, as it is clear that, in the practical implementation of the invention, materials, shapes and sizes of the shown details can be changed, as needed, and replaced with others technically equivalent.

For example, in other embodiments of the invention, not shown, the shaped shell 10 could present any number of openings 13 of the membrane 12, as well as the support elements 17, 19 and cavity or notch 18 of the tag 14 could be made in any number.

In particular, if the support elements 17, 19 are present in a number greater than one, it will be preferable that the same are structurally constructed in at least two portions of the tag 14, positioned at the same height and connected each other by at least one connecting base element 20.

## Claims

1. Mold for producing salted or sweet food products, ice creams and/or pastries, including at least one shaped shell (10) which is made at least partially in food grade silicone and/or soft elastomer wherein a first food fluid or liquid raw material is housed in at least one concave surface or cavity (11) of said shell (10) so as to directly derive the desired food product, said shaped shell (10) including at least one membrane (12) which delimits for at least one portion (16) said concave surface or cavity (11), said membrane (12) having at least one opening (13) for inserting at least one support of the finished food product within said first food raw material **characterized by** the fact that said shell (10) has at least one tag (14) which is placed in front of said opening (13), at least one element (17, 19) for supporting said support of the finished food product being provided on said tag (14); said support element (17, 19) is structurally realized in at least two portions which are placed at a same height and which are connected by at least one connection element (20); said connecting element (20) has at least one cavity (18) which enables and/or allows the user to pick up the support.

2. Mold as claimed in claim 1, **characterized by** the fact that; said support element (17, 19) has at least a guide (15) that allows a central insertion of said support inside the food raw material contained in the concave surface or cavity (11), so as to keep said support in a predetermined position during the production of said food products

3. Mold as claimed in claim 2, **characterized by** the fact that said tag (14) has a prefixed length which is equal to at least one portion of said support, said portion protruding from said finished food product.

4. Mold as claimed in claim 1, **characterized by** the fact that said membrane (12) is removable and/or divided in order to allow the user to remove said food product together with the support from said concave surface or cavity (11).

5. Mold as claimed in claim 1, **characterized by** the fact that within said concave surface or cavity (11) of said shaped shell (10) food products, such as ice cream, jellies, liquid sugar, tempered chocolate of any color and percentage of cocoa and soft dough in general, such as sugar pastes or almond pastes, licorice, grain dust, etc., are drained.

6. Mold as claimed in claim 1, **characterized by** the fact that said shaped shell (10) lies on a mainly longitudinal plane which is parallel to a plane supporting said finished food product.

## Patentansprüche

1. Form zur Herstellung von gesalzenen oder süßen Nahrungsmittelprodukten, Eiscremes und/oder Backwaren, enthaltend mindestens eine geformte Schale (10), die mindestens teilweise aus nahrungsmittelunbedenklichem Silikon und/oder weichem Elastomer hergestellt ist, wobei ein erstes Nahrungsmittelfluid oder flüssiges Rohmaterial in mindestens einer konkaven Oberfläche oder einem Hohlraum (11) der Schale (10) aufgenommen wird, um daraus direkt das gewünschte Nahrungsmittelprodukt abzuleiten, wobei die geformte Schale (10) mindestens eine Membran (12) enthält, die mindestens einen Teil (16) der konkaven Oberfläche oder des Hohlraums (11) abgrenzt, wobei die Membran (12) mindestens eine Öffnung (13) hat zum Einführen mindestens einer Stütze des fertigen Nahrungsmittelprodukts in das erste Nahrungsmittelrohmaterial, **gekennzeichnet durch** die Tatsache, dass die Schale (10) mindestens ein Etikett (14) hat, das vor der Öffnung (13) angeordnet ist, mindestens ein auf dem Etikett (14) vorgesehenes Element (17, 19) zum Stützen der Stütze des fertigen Nahrungsmittelprodukts; wobei das Stützelement (17, 19) strukturell realisiert ist in mindestens zwei Teilen, die in der selben Höhe angeordnet sind und die **durch** mindestens ein Verbindungselement (20) verbunden sind; wobei das Verbindungselement (20) mindestens einen Hohlraum (18) aufweist, der es dem Benutzer ermöglicht und/oder erlaubt, die Stütze zu greifen.

2. Form wie in Anspruch 1 beansprucht, **gekennzeichnet durch** die Tatsache, dass das Stützelement (17, 19) mindestens eine Führung (15) aufweist, die eine mittige Einführung der Stütze in das Nahrungsmittelrohmaterial ermöglicht, das in der konkaven Oberfläche oder dem Hohlraum (11) enthalten ist, um die Stütze während der Herstellung des Nahrungsmittelprodukts in einer vorgegebenen Position zu halten.

3. Form wie in Anspruch 2 beansprucht, **gekennzeichnet durch** die Tatsache, dass das Etikett (14) eine vorgegebene Länge hat, die mindestens gleich einem Teil der Stütze ist, wobei der Teil von dem fertigen Nahrungsmittelprodukt absteht.

4. Form wie in Anspruch 1 beansprucht, **gekennzeichnet durch** die Tatsache, dass die Membran (12) entfernbar und/oder teilbar ist, um es dem Benutzer zu erlauben, das Nahrungsmittelprodukt zusammen mit der Stütze von der konkaven Oberfläche oder dem Hohlraum (11) zu entfernen.

5. Form wie in Anspruch 1 beansprucht, **gekennzeichnet durch** die Tatsache, dass innerhalb der konkaven Oberfläche oder dem Hohlraum (11) der geformten Schale (10) Nahrungsmittelprodukte abgegossen sind, wie Eiscreme, Gelee, Flüssigzucker, temperierte Schokolade von beliebiger Farbe und Anteil von Kakao, weicher Teig im Allgemeinen, wie Süßteig oder Mandelteig, Lakritze, Getreidestaub, etc..

6. Form wie in Anspruch 1 beansprucht, **gekennzeichnet durch** die Tatsache, dass die geformte Schale (10) auf einer im Wesentlichen longitudinalen Ebene liegt, die parallel ist zu einer Ebene, welche das fertige Nahrungsmittelprodukt stützt.

## Revendications

1. Moule pour produire des produits alimentaires salés ou sucrés, des glaces et/ou des pâtisseries, comprenant au moins une coquille façonnée (10) qui est faite au moins en partie d'un silicone et/ou élastomère souple à usage alimentaire, dans lequel un premier fluide alimentaire ou une première matière brute liquide est introduit(e) dans au moins une surface concave ou cavité (11) de ladite coquille (10) de manière à former directement le produit alimentaire désiré, ladite coquille façonnée (10) comportant au moins une membrane (12) qui délimite au moins en partie (16) ladite surface concave ou cavité (11), ladite membrane (12) ayant au moins une ouverture (13) destinée à l'insertion d'au moins un support du produit alimentaire fini dans ladite première matière alimentaire brute, **caractérisé par le fait que** ladite coquille (10) possède au moins une patte (14) qui est placée en avant de ladite ouverture (13), au moins un élément (17, 19) destiné à supporter ledit support du produit alimentaire fini étant prévu sur ladite patte (14) ; ledit élément support (17, 19) est réalisé structurellement en au moins deux parties qui sont placées à la même hauteur et reliées par au moins un élément de liaison (20) ; ledit élément de liaison (20) présente au moins une cavité (18) qui donne à l'utilisateur la possibilité de soulever le support ou lui permet de le soulever.

2. Moule selon la revendication 1, **caractérisé par** le fait ledit élément support (17,19) possède au moins un guide (15) qui permet d'insérer ledit support en position centrale dans la matière alimentaire brute contenue dans la surface concave ou cavité (11), afin de maintenir ledit support dans une position prédéterminée pendant la production desdits produits alimentaires.

3. Moule selon la revendication 2, **caractérisé par le fait que** ladite patte (14) a une longueur prédéterminée qui est au moins égale à une partie dudit support, ladite partie faisant saillie sur ledit produit alimentaire fini.

4. Moule selon la revendication 1, **caractérisé par le fait que** ladite membrane (12) est amovible et/ou divisée de manière à permettre à l'utilisateur de retirer ledit produit alimentaire en même temps que ledit support de ladite surface concave ou cavité (11).

5. Moule selon la revendication 1, **caractérisé par le fait que**, dans ladite surface concave ou cavité (11) de ladite coquille façonnée (10), sont coulés des produits alimentaires tels que des glaces, des gelées, du sirop de sucre, du chocolat trempé de couleur quelconque et ayant un pourcentage de cacao quelconque et de la pâte tendre en général, telle que les pâtes de sucre ou des pâtes d'amande, de la réglisse, de la poudre de céréale, etc.

6. Moule selon la revendication 1, **caractérisé en ce que** ladite coquille façonnée (10) repose sur un plan essentiellement longitudinal qui est parallèle à un plan qui supporte ledit produit alimentaire fini.
